# EUROPEAN PATENT APPLICATION

(11) **EP 4 796 371 A1**
(43) Date of publication of application: **26.08.2026**
(21) Application number: 24879459.6
(22) Date of filing: 10.09.2024
(51) Int. Cl.: B60L 53/12, B60L 53/14, H02J 50/10, H02J 7/00

(54) **WIRELESS POWER SUPPLY SYSTEM**

(30) Priority: 19.10.2023 JP 2023180475; 26.08.2024 JP 2024144496
(71) Applicant: DAIHEN Corporation, Yodogawa-ku Osaka-shi, Osaka 532-8512 (JP)
(72) Inventor: TSUKIYAMA, Daisuke, Osaka-shi, Osaka 532-8512 (JP)
(74) Representative: Cabinet Beaumont
(86) International application number: PCT/JP2024/032338
(87) International publication number: WO 2025/084032

(57) **Abstract**

Provided are a wireless power supply system that can be retrofitted without interfering with safety assurances provided by manufacturers of electric mobility vehicles, and a wireless power supply control method. The wireless power supply system comprises: a power reception coil attached to an electric mobility vehicle; a connector connected to a charging port for wired power supply of the electric mobility vehicle; and a power conversion unit that is connected to the power reception coil and the connector, and that converts power received by the power reception coil into a form that can be supplied via the charging port to a storage battery installed in the electric mobility vehicle.

## Description

### Technical Field

The present invention relates to a wireless power supply system that is applicable as a retrofit.

### Background Art

Electric mobilities that use a large-capacity lithium-ion battery as a drive battery and that drive a traveling motor with the power stored in the drive battery have begun to become widespread. Electric mobilities that use a battery as a drive energy source include not only electric vehicles, but also unmanned transport vehicles, forklifts, flying vehicles such as so-called drones, waterborne mobilities such as an electric propulsion vessel. As a method for supplying power to the drive battery mounted in these electric mobilities, wireless power supply systems that wirelessly supply power without using a power cable have been put into practical use.

While wired power supply systems have the advantage of enabling high-speed power supply, whereas wireless power supply has the advantage of enabling charging to be started without an operation by a user as long as the electric mobility can be parked or stopped according to the location of a fixed power supply coil.

From the user's perspective, it is desirable that the electric mobility can be charged by either wired or wireless means, thereby allowing selection according to the type of power supply equipment.

As a method for supplying power to a battery mounted in an electric mobility, various proposals for supporting both wired power supply and wireless power supply have been made. Patent Literature 1 discloses an electric vehicle that can simultaneously operate wired power supply and wireless power supply to exchange large amounts of power. Patent Literature 2 discloses a configuration in which both a connection plug for wired power supply and a power receiving coil for wireless power supply are provided, and a switch for switching power supply between wired power supply and wireless power supply is provided.

### Citation List

### Patent Literature:

Patent Literature 1: Japanese Patent Application Laid-Open No. 2023-028028
Patent Literature 2: Japanese Published Patent Publication No. 2019-531680 Summary

### Technical Problems

As disclosed in Patent Literatures 1 and 2, if the electric mobility is configured to support both wired power supply and wireless power supply from the time of manufacture, the safety of the electric mobility that carries people can be guaranteed by the manufacturer. However, in an electric mobility having only a wired power supply function, if the application of a wireless power supply system as a retrofit is technically feasible, but modifications to control devices built into the mobility or modifications to the electrical system are required, the assurance of safety of the electric mobility is compromised.

An object of the present disclosure is to provide a wireless power supply system that is applicable as a retrofit without interfering with the assurance of safety by the manufacturer of an electric mobility.

### Solution to Problems

A wireless power supply system according to one embodiment of the present disclosure includes a power receiving coil mounted on an electric mobility; a connector connected to a receptacle for wired power supply of the electric mobility; and a power conversion unit that is connected to the power receiving coil and the connector, and that converts power received by the power receiving coil into power that can be supplied, via the receptacle, to a battery mounted in the electric mobility.

In the wireless power supply system of the present disclosure, when the power receiving coil is mounted on an outer surface of the electric mobility, an outer dimension of a cover of the power receiving coil may be within an allowable protrusion dimension specified in safety standards of the electric mobility, and a total weight of the power receiving coil, the connector, and the power conversion unit may be within a weight specified in the safety standards of the electric mobility. The safety standards are established in each country; for example:
(1) United States: Federal Motor Vehicle Safety Standards (FMVSS)
(2) Europe: European Economic Community Directive (EEC Directive)
(3) China: National Standards of the People's Republic of China
(4) Canada: Canada Motor Vehicle Safety Standards (CMVSS)

The specified values differ depending on the country in which the electric mobility is operated.

Accordingly, the outer dimension falls within the dimensions specified as not requiring a structural change inspection or the like even when automotive components are installed, and therefore, it is not necessary to re-inspect the safety of the electric mobility.

### Advantageous Effects of Invention

According to the present disclosure, the wireless power supply stem is applicable as a retrofit without interfering with the assurance of safety by the manufacturer of the electric mobility.

### Brief Description of Drawings

FIG. 1 is a schematic view of a wireless power supply system of Embodiment 1.
FIG. 2 is a block diagram illustrating a configuration of the wireless power supply system of Embodiment 1.
FIG. 3 is a flowchart illustrating one example of a power supply process performed by the wireless power supply system.
FIG. 4 is a block diagram illustrating a configuration of a wireless power supply system of Embodiment 2.
FIG. 5 is a flowchart illustrating one example of a power supply process performed by the wireless power supply system of Embodiment 2.
FIG. 6 is a flowchart illustrating one example of the power supply process performed by the wireless power supply system of Embodiment 2.
FIG. 7 is a block diagram illustrating a configuration of a wireless power supply system of Embodiment 3.
FIG. 8 is a flowchart illustrating one example of a power supply process performed by the wireless power supply system of Embodiment 3.
FIG. 9 is a flowchart illustrating one example of the power supply process performed by the wireless power supply system of Embodiment 3.

### Description of Embodiments

Hereinafter, the present disclosure will be specifically described with reference to the drawings illustrating embodiments thereof.

### (Embodiment 1)

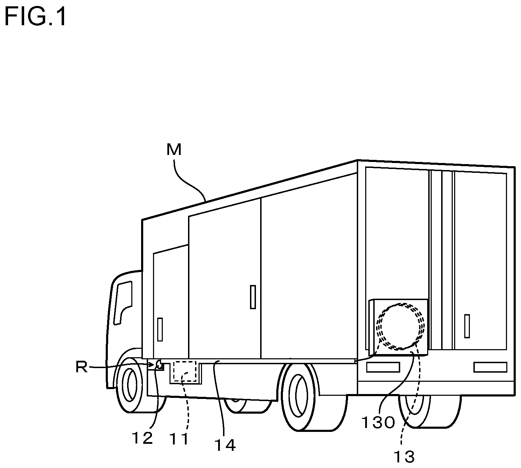

FIG. 1 is a schematic view of a wireless power supply system 100 of Embodiment 1. The wireless power supply system 100 is mounted on and used with an electric mobility (for example, an electric vehicle) M including a charging port R (also referred to as an inlet) for wired power supply. The wireless power supply system 100 is applied to the electric mobility M that is not compatible with wireless power supply. In FIG. 1 and the following description, an electric vehicle (EV) truck is described as an example of the electric mobility M; however, the present invention is not limited thereto, and the electric mobility M may be an electric vehicle, an unmanned transport vehicle, a forklift, a robot, a flying vehicle such as a so-called drone, or a waterborne mobility such as an electric propulsion vessel.

The wireless power supply system 100 includes a connector (plug) 12 connected to the charging port R of the electric mobility M; a power receiving coil 13 mounted on the rear surface of the electric mobility M; and a main body 11 connected between the connector 12 and the power receiving coil 13. The main body 11 is provided, for example, on a side surface of the electric mobility M as illustrated in FIG. 1, and the power receiving coil 13, the main body 11, and the connector 12 are provided with covers 130 and 14.

The location where the power receiving coil 13 is provided is not limited to the rear of the vehicle body, but may be a side surface, the bottom surface of the vehicle body, or the interior of the vehicle body. The outer dimension of the cover 130 of the power receiving coil 13 in the thickness direction is within the allowable protrusion dimension specified in the safety standards. For example, the outer dimension of the cover 130 in the coil axial direction is within a dimensional range (±3 centimeters) specified as not requiring a structural change inspection or the like for the vehicle body of the electric mobility M even when automotive components are installed. The outer dimension (thickness) of the cover 130 of the power receiving coil 13 in the coil axial direction may be set to 2 centimeters or less such that the power receiving coil 13 may be mounted on an outer side surface of the electric mobility M. In addition, the power receiving coil 13 may be provided on an inner side of a structure (for example, a door), which forms the outer shell of the electric mobility M, so as to face outward, rather than on the outer surface of the vehicle body. In this case, the power supply distance between the power receiving coil 13 and a power supply coil becomes longer, but the power receiving coil 13 does not protrude to the outside of the vehicle body due to its installation, and therefore, no dimensional restrictions may be provided.

The specific numerical values described above as examples of the allowable protrusion dimension specified in the safety standards may be interpreted in accordance with the safety standards of each country. Similarly, the regulations according to the weight of the electric mobility M, which will be described later, may also be interpreted in accordance with the safety standards in each country or region.

The location where the main body 11 is provided may be either inside or outside of the vehicle body of the electric mobility M. The main body 11 may be disposed in a cargo space. Since the main body 11 is connected to the power receiving coil 13 mounted on the outer side of the vehicle body and to the connector 12 fitted into the charging port R provided to be partially exposed to the outside, the main body 11 may be mounted on the side surface of the vehicle body as illustrated in FIG. 1. When the main body 11 is provided on the outer side surface, the cover 14 of the main body 11 is preferably set to have the allowable protrusion dimension specified in the safety standards, namely, 2 cm or less.

The connector 12 is used while being constantly connected to the charging port R. The connector 12 preferably has a shape that allows the cover of the charging port R to be closed in a state in which the connector 12 is connected to the charging port R.

As illustrated in FIG. 1, it is desirable that the total weight of the wireless power supply system 100 is within the weight in an installed state specified in the safety standards, namely, within +50 kg (for light vehicles and small vehicles subjected to inspection) or within +100 kg (for standard vehicles and large special vehicles), according to the size of the electric mobility M, such that safety re-evaluation is not required even when the main body 11, the connector 12, and the power receiving coil 13 are mounted on the electric mobility M that is not compatible with wireless power supply.

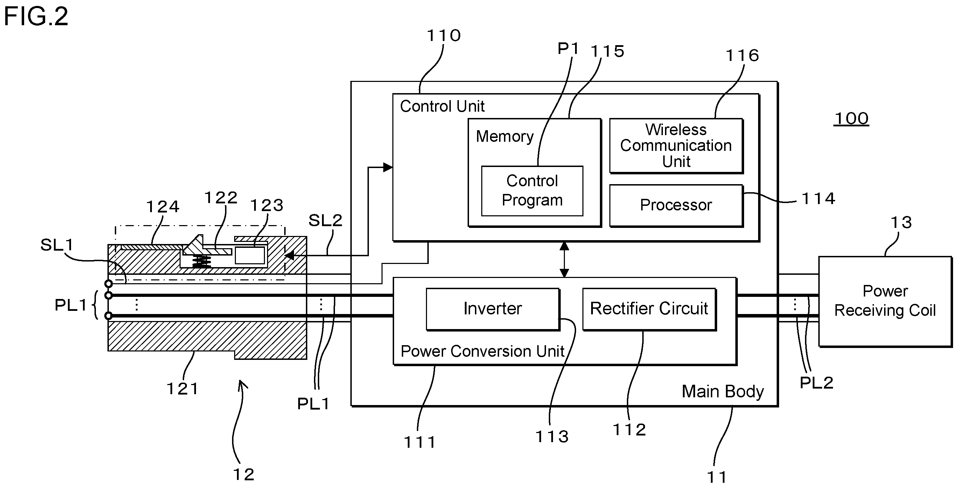

The mounting position of the power receiving coil 13 may be determined according to the height of a power transmission device (not illustrated). The power transmission device includes a power transmission coil having an axis in a horizontal direction so as to face the power receiving coil 13 when the electric mobility M, which is an EV truck, is stopped, and a communication unit capable of communicating with a control unit (charging control unit) 110 (see FIG. 2) provided in the main body 11. The power transmission device may include a power transmission coil having an axis in a vertical direction and buried in the ground.

FIG. 2 is a block diagram illustrating a configuration of the wireless power supply system 100 of Embodiment 1. The wireless power supply system 100 includes the main body 11, the connector 12, and the power receiving coil 13.

The connector 12 connected to the charging port R of the electric mobility M includes a power line PL1 that transmits power; a signal line SL1 for exchanging signals between an on-board charging control device and the power transmission device; and a signal line SL2 for exchanging signals between each mechanism of the connector 12 and the control unit 110. The connector 12 includes a socket 121 having a tubular shape that fits into the charging port R, and a latch (locking portion) 122 capable of protruding from the outer peripheral surface of the socket 121. The connector 12 includes a locking mechanism 123 that locks and unlocks the latch 122, and a retraction mechanism 124 that forcibly retracts the latch 122 to the interior of the socket 121. The latch 122 is biased by a compression spring inside a recess provided at a specific location on the socket 121, and thus can protrude from the socket 121. Initially, the retraction mechanism 124 blocks the opening of the recess of the socket 121 with the socket 121 retracted into the interior of the recess. The retraction mechanism 124 opens the opening of the recess of the socket 121, and allows the latch 122 to protrude, based on a signal supplied from the control unit 110 through the signal line SL2. The retraction mechanism 124 is not limited to the structure illustrated in FIG. 2, and may have any other structure as long as the retraction mechanism 124 functions to prevent the locking portion such as the latch 122 from engaging with the charging port R. For example, the retraction mechanism 124 may include a solenoid switch that retracts the latch 122 into the interior of the socket 121.

In addition, the retraction mechanism 124 may have a structure that retracts a part or the entirety of the socket 121 from the charging port R. Furthermore, the locking portion that provides locking between the connector 12 and the charging port R is not limited to the latch 122 provided in the socket 121, and may be a latch provided in the charging port R. In this case, for example, the connector 12 is configured such that a fitting portion (recess) into which the latch of the charging port R fits is provided on the outer periphery of the socket 121. In this case, the retraction mechanism 124 may be realized as a mechanism that retracts the latch by pushing out the latch from the fitting portion toward the charging port R side, or may have a structure that pushes out the latch and retracts a part or the entirety of the socket 121 from the charging port R.

The main body 11 includes the control unit 110 and a power conversion unit 111. The power conversion unit 111 is connected to the power receiving coil 13 through a power line PL2. The power conversion unit 111 rectifies the highfrequency power, which is received by the power receiving coil 13, using a rectifier circuit 112, converts the rectified power into a direct current, and smooths the direct current. The power conversion unit 111 converts the direct current output from the rectifier circuit 112 into power having a frequency or a voltage, including a direct current, which required by the electric mobility M side, by an inverter (converter) 113 based on control from the control unit 110, and outputs the power from the power line PL1 of the connector 12.

The control unit 110 is connected to the power conversion unit 111 inside the main body 11. The control unit 110 controls ON/OFF of the inverter 113, and controls an output from the inverter 113. The control unit 110 performs specified communication related to power supply with the on-board charging control device through the signal line SL1, based on information transmitted to and received from the power transmission device. Specifically, for example, the control unit 110 exchanges information such as the state of charge, charging voltage, and charging current with the on-board charging control device in accordance with CHAdeMO (registered trademark), North American Charging Standard (NACS), or the like, and controls power supply from the power transmission device to a battery mounted in the electric mobility M.

The control unit 110 internally includes a processor 114, a memory 115, and a wireless communication unit 116 therein. The control unit 110 may include a power storage unit that supplies startup power sufficient to be able to start up the control unit 110 itself and the wireless communication unit 116. A central processing unit (CPU), a micro processing unit (MPU), or the like is used as the processor 114. The processor 114 reads a control program P1 stored in the memory 115, and realizes control processing related to charging.

A non-volatile memory is used as the memory 115. The control program P1 is stored in the memory 115. The control program P1 is embedded in the memory 115 during the manufacture of the control unit 110. The control program P1 may be a program that is recorded in a recording medium readable by a computer (processor) and that is read by the processor 114 and stored in the memory 115.

The wireless communication unit 116 realizes wireless communication with the power transmission device (not illustrated). The wireless communication unit 116 performs communication, for example, using WiFi (registered trademark). The wireless communication unit 116 may perform communication using Bluetooth (registered trademark). The standards for wireless communication by the wireless communication unit 116 are not limited to WiFi or Bluetooth; but preferably involve short-range wireless communication.

The owner of the electric mobility M mounts the wireless power supply system 100 configured in this way on the electric mobility M. The owner connects the connector 12 to the charging port R of the electric mobility M, and closes the cover of the charging port R. When the wireless power supply system 100 is not started up without receiving power supply, the latch 122 does not engage with the locking portion, which is provided on the inner surface of the charging port R, due to the retraction mechanism 124. Accordingly, the on-board charging control device avoids determining that the charging plug remains inserted into the charging port R.

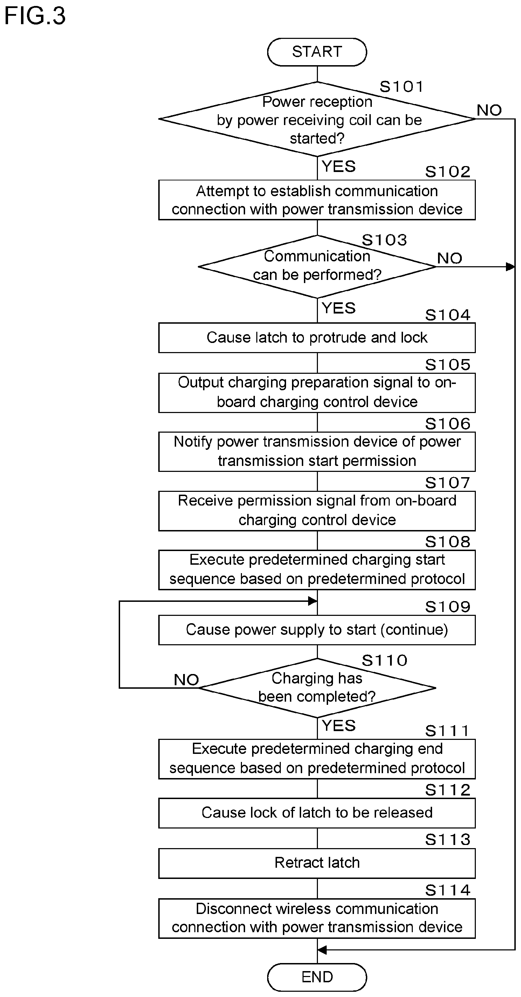

The wireless power supply system 100 mounted in this way realizes wireless power supply as follows. FIG. 3 is a flowchart illustrating one example of a power supply process performed by the wireless power supply system 100.

The processor 114 of the control unit 110 determines whether power reception by the power receiving coil 13 can be started (step S101). In step S101, the processor 114 may determine whether power reception can be started, depending on whether a charging control instruction is received from the on-board charging control device through the signal line SL1. The on-board charging control device can cause charging to start upon receiving a charging start operation from a driver in the driver's seat of the electric mobility M that is stopped, or upon receiving an OFF operation of the startup switch of the electric mobility M (for example, an OFF operation of the ignition switch provided in the electric mobility M). The control unit 110 may detect such an operation, and start the following process.

In step S101, for example, the processor 114 may be started up by turning ON a built-in switch (not illustrated), and determine that power reception can be started. In this example, the driver who attempts to perform wireless power supply or a power supply operator performs an operation to turn ON the switch (not illustrated) of the wireless power supply system 100 in a state in which the electric mobility M is stopped at a position where power supply can be performed.

In step S101, the processor 114 may automatically detect that the electric mobility M is stopped at a position where power supply can be performed, depending on whether weak radio waves emitted from the power transmission coil of the power transmission device can be received by the power receiving coil 13, thereby determining that power supply can be started. In this example, the control unit 110 includes a startup circuit that turns ON power supply from the power storage unit in response to weak radio waves from the power transmission coil. The control unit 110 may include a built-in acceleration sensor, and determine whether power reception can be started, only when it can be confirmed that the electric mobility M is stopped.

If it is determined that power reception by the power receiving coil 13 cannot be started (S101: NO), the processor 114 ends the process. When a predetermined standby time has elapsed, the process of step 101 is resumed.

If it is determined that power reception by the power receiving coil 13 can be started (S101: YES), the processor 114 attempts to establish a communication connection with the power transmission device via the wireless communication unit 116 (step S102), and determines whether communication can be performed (step S103). In S103, the processor 114 may transmit authentication data (the registered vehicle number, the serial number of the control unit 110 itself, and the like), which is stored in the memory 115, to the power transmission device, and allow the communication counterpart to be authenticated on the power transmission device side.

If the communication is established and it is determined that communication can be performed (S103: YES), the processor 114 causes the retraction mechanism 124 to be accommodated and causes the latch 122 to protrude and lock to the charging port R, thereby performing locking (step S104). In step S104, the processor 114 causes the on-board charging control device to execute the same process as when a wired power supply plug is connected to the charging port R.

In step S103, if it is determined that communication cannot be performed (S103: NO), the processor 114 determines that wireless power supply cannot be performed, and ends the process with an error.

After the latch 122 is locked, the processor 114 outputs a charging preparation signal to the on-board charging control device through the signal line SL1 (step S105). The processor 114 notifies the power transmission device of a power transmission start permission from the power transmission device via the wireless communication unit 116 (step S106). In wireless power supply, an increase in the output voltage at which power can be received by the power receiving coil 13 takes more time than in wired power supply; therefore, by issuing a power transmission start permission in advance to increase the output power (pre-charging), the control unit 110 can control the output from the inverter 113 so as to meet an increase in output in step S108 and subsequent steps.

When the processor 114 receives a permission signal from the on-board charging control device in response to the charging preparation signal output in step S105 (step S107), the processor 114 executes a predetermined sequence (charging start process) in accordance with a predetermined protocol for wired power supply with the on-board charging control device (step S108). The predetermined protocol is, for example, CHAdeMO as described above or the like. In step S108, the processor 114 causes the output of the inverter 113 to increase such that the process with the on-board charging control device is not stopped.

Accordingly, the processor 114 causes power supply to start (continue) (step S109). The control unit 110 that causes power supply to start may cause its own power storage unit to store the power receivable by the power receiving coil 13.

The processor 114 determines whether charging has been completed on the on-board charging control device side, such as when the battery is fully charged (step S110). In step S110, the processor 114 may determine when the power transmission device has been notified of the end of charging by the on-board charging control device. In step S110, the processor 114 may determine whether the state of charge obtained from the on-board charging control device reaches a predetermined level. In step S110, if it is determined that power cannot be received by the power receiving coil 13, that is, if it is determined that the inverter 113 cannot output the required current and voltage, the processor 114 may determine that charging has been completed (or interrupted). If it is determined that charging has not been completed (S110: NO), the processor 114 returns the process to step S109.

If it is determined that charging has been completed (S110: YES), the processor 114 executes a predetermined sequence (charging end process) with the on-board charging control device (S111). The processor 114 causes the lock of the latch 122 to be released (step S112), and operates the retraction mechanism 124 to retract the latch 122 (step S113). The process of step S112 may be included in the sequence of the predetermined charging end process. The processor 114 disconnects the wireless communication connection with the power transmission device (step S114), and ends the process.

The processing procedures illustrated in FIG. 3 are one example, and are limited thereto. For example, the start of the process of step S101 may start up upon receiving a stop notification from another electric mobility M. In addition, the timing of releasing the lock of the latch 122 or operating or accommodating the retraction mechanism 124 may occur at any other timing as long as the latch 122 can be locked during power supply.

After charging has been completed, the latch 122 of the connector 12 is not engaged with the charging port R, and therefore, the on-board charging control device side of the electric mobility M avoids determining that the charging plug remains inserted, and the electric mobility M can be driven with the wireless power supply system 100 remaining mounted. In addition, the control unit 110 may execute processes such as continuously outputting (cancelling) a specific signal to the signal line SL1 such that the on-board charging control device does not determine that the plug remains inserted.

In this way, wireless power supply can be performed by mounting the wireless power supply system 100 on the electric mobility M. The charging control device mounted on the electric mobility M enables power reception and the charging of the on-board battery transmitting and receiving information to and from the power supply device, according to the same sequence as that of wired power supply. Therefore, the electric mobility M does not require modifying the electrical system, changing the software of the charging control device, and switching via a switch to realize wireless power supply. The mounting the wireless power supply system 100 solely on the electric mobility M enables an increase in weight or a change in dimensions to fall within a range that does not require vehicle inspection. Therefore, wireless power supply can be realized while maintaining the assurance of safety by the manufacturer of the electric mobility M as is. It should be noted that, in the example illustrated in Embodiment 1, when performing wired power supply, the owner, driver, or power supply operator of the electric mobility M can perform wired power supply by opening the cover of the charging port R, removing the connector 12, and inserting a plug from the power supply device for wired power supply into the charging port R.

### (Embodiment 2)

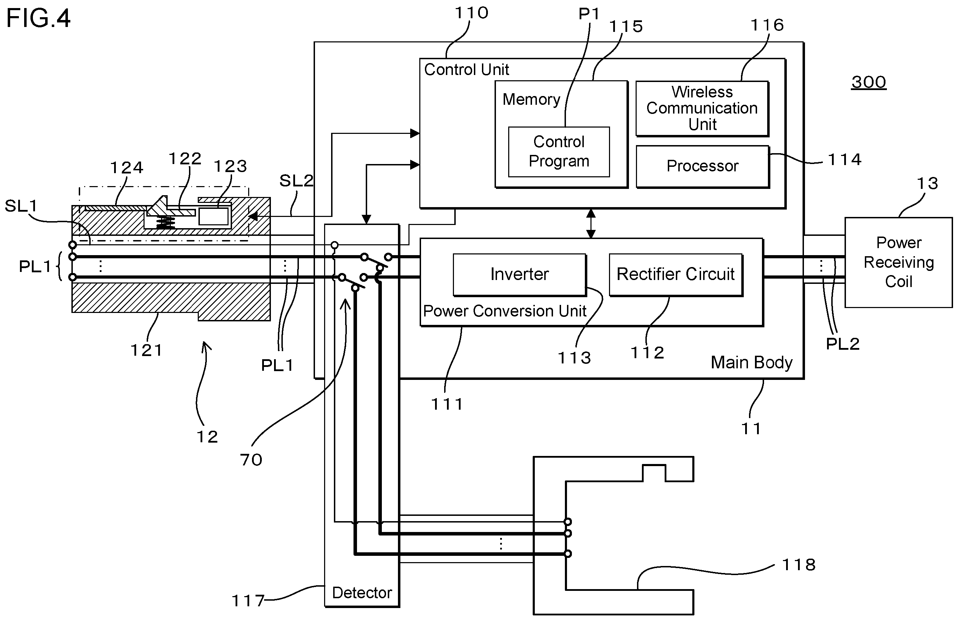

In Embodiment 2, a configuration in which wired power supply can also be performed with the connector 12 remaining inserted into the charging port R is employed. FIG. 4 is a block diagram illustrating a configuration of a wireless power supply system 300 of Embodiment 2. Among the configurations of the wireless power supply system 300 illustrated in Embodiment 2, configurations that are common to the wireless power supply system 100 of Embodiment 1 are denoted by the same reference signs, and detailed description thereof is omitted.

The wireless power supply system 300 of Embodiment 2 includes a main body 1, the connector 12, and the power receiving coil 13. In the wireless power supply system 300, a detector 117 is provided between the main body 1 and the connector 12. The detector 117 is branched and connected to the power conversion unit 111 and a wired charging port (wired connector) 118.

The detector 117 includes a first switch 70 that branches and connects the power line PL1 to one of the power conversion unit 111 and the wired charging port 118. The first switch 70 is configured as, for example, a C-contact relay, and is connected to receive power in an OFF state via the wired charging port 118. The first switch 70 is switched between ON and OFF by the control unit (switching control unit) 110.

The detector 117 detects whether a wired power supply plug is connected to the wired charging port 118, and outputs the detection result to the control unit 110.

The main body 11 is provided with an output unit such as a display or an LED lamp, and the control unit 110 may output whether wireless power supply is being performed or wired power supply is being performed.

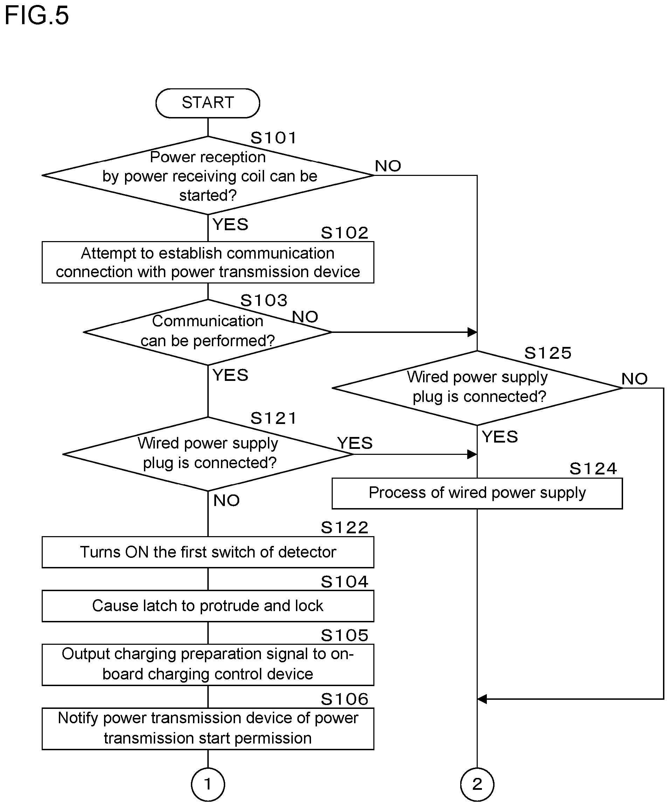

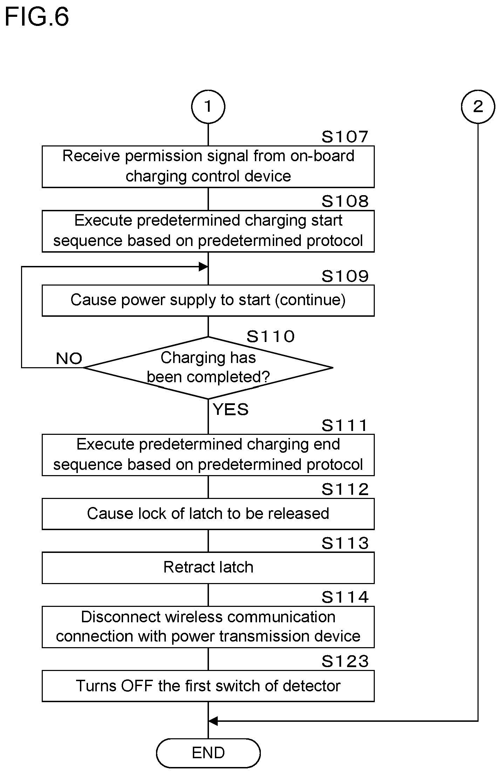

FIGS. 5 and 6 are flowcharts illustrating one example of a power supply process performed by the wireless power supply system 300 of Embodiment 2. Among the processing procedures illustrated in the flowcharts of FIGS. 5 and 6, procedures that are common to the processing procedures illustrated in the flowchart of FIG. 3 of Embodiment 1 are denoted by the same step numbers, and detailed description thereof is omitted.

In Embodiment 2, if it is determined that communication can be performed (S103: YES), it is determined whether the detector 117 detects that the wired power supply plug is connected to the wired charging port 118 (step S121).

If it is determined that the connection of the wired power supply plug is not detected (S121: NO), the processor 114 turns ON the first switch 70 of the detector 117 to disable the connection to the wired charging port 118 (step S122), and causes the latch 122 to be locked (S104).

In Embodiment 2, if charging by wireless power supply has been completed (S110: YES), the processor 114 executes a predetermined charging end sequence (S111). The processor 114 causes the lock of the latch 122 to be released (S112), causes the latch 122 to retract (S113), disconnects the communication connection with the power transmission device (S114), and then, returns the first switch 70 of the detector 117 to OFF (step S123), and ends the process.

In Embodiment 2, in step S121, if it is determined that the connection of the wired power supply plug is detected (S121: YES), the processor 114 causes wired power supply to be performed (step S124), and ends the process. In this case, the process by the control unit 110 of the wireless power supply system 300 is suspended.

In step S103, if it is determined that communication cannot be performed (S103: NO), the processor 114 determines whether the connection of the wired power supply plug is detected (step S125). In step S125, if it is determined that the connection of the wired power supply plug is detected (S125: YES), the process proceeds to step S124.

In step S125, if it is also determined that the connection of the wired power supply plug is not detected (S125: NO), the processor 114 determines that power supply cannot be performed, and ends the process with an error.

### (Embodiment 3)

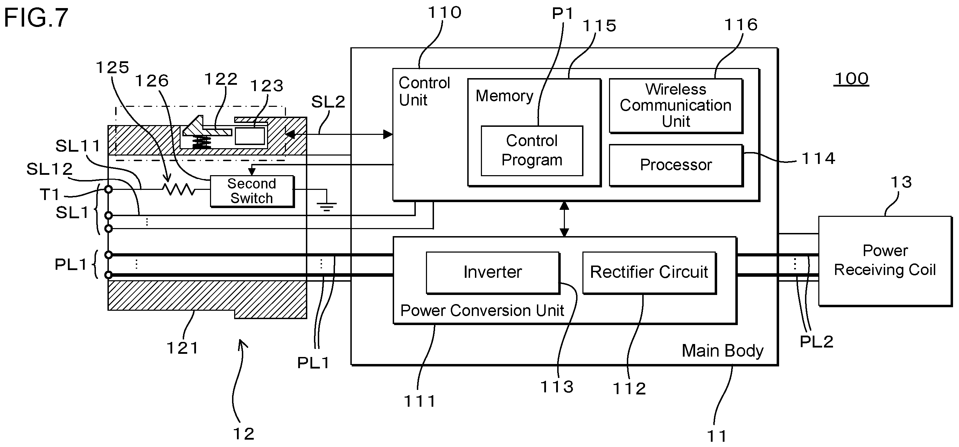

In Embodiment 3, a configuration in which wired power supply can also be performed in a method different from that of Embodiment 2, with the connector 12 remaining inserted into the charging port R, is employed. FIG. 7 is a block diagram illustrating a configuration of the wireless power supply system 100 of Embodiment 3. Among the configurations of the wireless power supply system 100 illustrated in Embodiment 3, configurations that are common to the wireless power supply system 100 of Embodiment 1 are denoted by the same reference signs, and detailed description thereof is omitted.

Although not illustrated and described in Embodiment 1 and Embodiment 2, the signal line SL1 of the connector 12 includes signal line SL11, SL12, ...for exchanging information with the on-board charging control device based on a predetermined protocol, in addition to a communication line for performing controller area network (CAN) communication or other communication with the on-board charging control device. The signal line SL11, which is one of a plurality of the signal lines SL11, SL12, ...included in the signal line SL1, is a line for confirming that the connector 12 is connected to the charging port R. A distal end of the signal line SL11 inside the connector 12 is referred to as a connection confirmation terminal T1, and when the connector 12 is connected to the charging port R, the distal end is connected to a high potential (for example, 12 V) on the electric mobility M side.

A proximal end of the signal line SL11 is connected to a reference potential (for example, 0 V), which is provided inside the connector 12, via a predetermined resistance 125 and a second switch 126. The second switch 126 is switched between conduction and non-conduction according to an instruction from the control unit 110.

When a signal line on the charging port R side connected to the connection confirmation terminal T1 conducts with the reference potential, which is provided in the connector 12, via the resistance 125, the potential of a predetermined contact point in the charging port R becomes a specific value, and therefore, the on-board charging control device can detect this condition and detect the insertion of the connector 12 into the charging port R. When the second switch 126 is turned ON in a state in which the connection confirmation terminal T1 of the connector 12 is capable of conducting with the high potential provided in the on-board charging control device of the electric mobility M, the on-board charging control device can detect that the connector 12 is connected to the charging port R. Conversely, when the second switch 126 is turned OFF, the proximal end side of the signal line SL11 inside the connector 12 floats with respect to the reference potential. Even if the connection confirmation terminal T1 of the connector 12 is capable of conducting with the high potential provided in the on-board charging control device of the electric mobility M, when the second switch 126 is turned OFF, the potential of the predetermined contact point in the charging port R does not decrease, and the on-board charging control device detects that the connector 12 is not connected to the charging port R.

In Embodiment 3, the control unit 110 can detect the ON and OFF states of the startup switch of the electric mobility M.

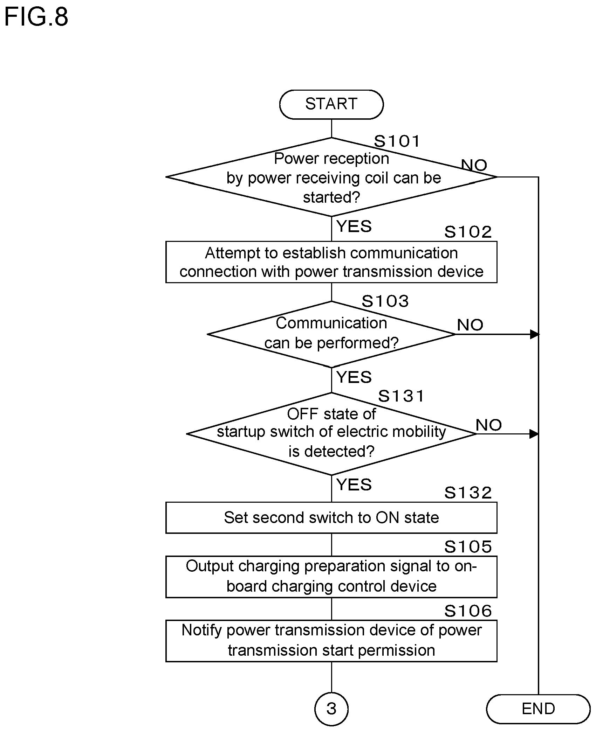

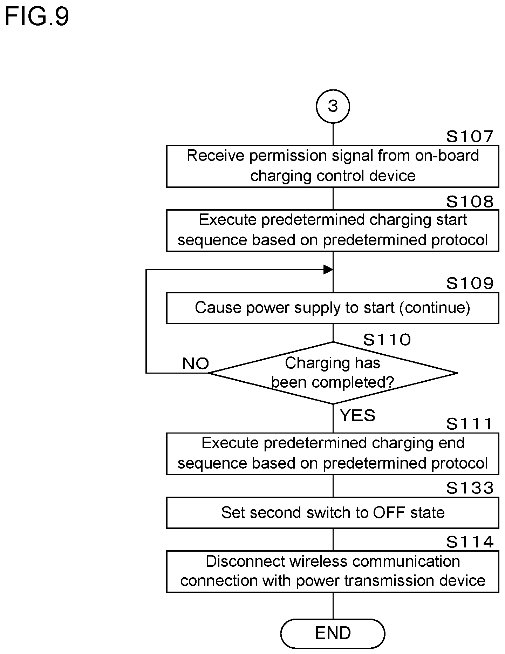

FIGS. 8 and 9 are flowcharts illustrating one example of a power supply process performed by the wireless power supply system 100 of Embodiment 3. Among the processing procedures illustrated in the flowcharts of FIGS. 8 and 9, procedures that are common to the processing procedures illustrated in the flowchart of FIG. 3 of Embodiment 1 are denoted by the same step numbers, and detailed description thereof is omitted.

In Embodiment 3, if it is determined that communication with the power transmission device can be performed (S103: YES), the processor 114 of the control unit 110 determines whether the OFF state of the startup switch of the electric mobility M can be detected (step S131). In step S131, it is sufficient if the processor 114 can detect the stop of the electric mobility M, that is, if the processor 114 can detect that the drive battery can be charged, rather than detecting the OFF state of the startup switch of the electric mobility M. If it is determined that the OFF state of the startup switch of the electric mobility M cannot be detected (S131: NO), charging cannot be performed with the startup switch remaining in an ON state, and therefore, the process is ended in the same manner as when it is determined that power reception by the power receiving coil 13 cannot be started (S101: NO).

If it is determined that the OFF state of the startup switch of the electric mobility M can be detected (S131: YES), the processor 114 sets the second switch 126 to an ON state (step S132). In conjunction with a circuit that acquires the state of the startup switch of the electric mobility M, the second switch 126 may be configured to turn ON when the startup switch of the electric mobility M is OFF or turn OFF when the startup switch of the electric mobility M is ON. In step S132, the on-board charging control device of the electric mobility M can detect that the connector 12 is inserted into the charging port R.

Thereafter, the processor 114 outputs a charging preparation signal to the on-board charging control device (S105), and executes the processes of steps S106 to S110 including pre-charging for increasing the output in advance and a preliminary operation based on a predetermined protocol. If it is determined that charging has been completed (S110: YES), the processor 114 executes a predetermined charging end sequence (S111), and sets the second switch 126 to an OFF state (step S133). In the process of step S133, the conduction of a connection pin on the electric mobility M side connected to the connection confirmation terminal T1 is released. Therefore, the on-board charging control device of the electric mobility M can detect that the connector 12 has been removed from the charging port R. Accordingly, on the electric mobility M side, the startup switch of the electric mobility M can be turned ON. Before or after this process, the processor 114 disconnects the wireless communication connection with the power transmission device (step S114), and ends the process.

In step S110, the processor 114 determines whether charging has been completed on the on-board charging control device side, for example, when the state of charge of the battery subjected to power supply reaches a predetermined level; however, the present invention is not limited thereto. In a large electric mobility M in which the full charge capacity of the battery exceeds 100 to 200 kWh, approximately 10 to 20 hours are required even if charging is continuously performed at a power value of 10 kW. Since it is desirable for safety to avoid charging for an excessive time, it is necessary to stop charging once after a predetermined time. For this reason, in step S110, even if it is determined that charging has not been completed on the on-board charging control device side, the processor 114 may determine whether the continuous charging time has reached a predetermined time (for example, 10 hours). This determination may be a determination on the on-board charging control device side. When the predetermined time is reached, the processor 114 executes the processes of step S111 and step S133 while allowing power transmission from the power transmission device to continue, and then turns ON the second switch (S132), and causes charging to resume in the processes of steps S108 and S109. Alternatively, charging may be stoppable other than by the determination in step S110, in response to an instruction from the power transmission device or an external source, or based on a stop instruction via an operation unit or the like provided in the control unit 110.

In this way, both wireless power supply and wired power supply are selectable by the wireless power supply system 100 that is retrofitted, without inhibiting the original configuration of the electric mobility M in which wired power supply can be performed.

The embodiments disclosed as described above are illustrative in all aspects, and are not intended to limit the present invention. The scope of the present invention is defined by the claims, and includes all modifications within the concept and scope equivalent to the claims.

### Reference Signs List

- 100, 300: wireless power supply system
- 11: main body
- 12: connector
- 13: power receiving coil
- 110: control unit
- 111: power conversion unit
- 114: processor
- 115: memory
- 116: wireless communication unit
- 122: latch (locking portion)
- 124: retraction mechanism

## Claims

1. A wireless power supply system comprising:
a power receiving coil mounted on an electric mobility;
a connector connected to a charging port for wired power supply of the electric mobility; and
a power conversion unit that is connected to the power receiving coil and the connector, and that converts power received by the power receiving coil into power that can be supplied, via the charging port, to a battery mounted in the electric mobility.

2. The wireless power supply system according to claim 1,
wherein the power receiving coil is mounted on an outer surface of the electric mobility, and
an outer dimension of a cover of the power receiving coil is within an allowable protrusion dimension specified in safety standards of the electric mobility.

3. The wireless power supply system according to claim 1,
wherein the power receiving coil is mounted on an inner side of an outer shell of the electric mobility, facing outward.

4. The wireless power supply system according to claim 1,
wherein a total weight of the power receiving coil, the connector, and the power conversion unit is within a weight specified in safety standards of the electric mobility.

5. The wireless power supply system according to any one of claims 1 to 4,
wherein the connector includes a locking portion that locks to the charging port, and
the wireless power supply system further comprises a control unit that controls a retraction mechanism to retract the locking portion of the connector such that the locking portion of the connector does not lock to the charging port, except during charging of the battery with the power received by the power receiving coil.

6. The wireless power supply system according to any one of claims 1 to 4,
wherein the connector locks to a locking portion provided in the charging port, and
the wireless power supply system further comprises a control unit that controls a retraction mechanism to prevent the connector from locking to the locking portion of the charging port, except during charging of the battery with the power received by the power receiving coil.

7. The wireless power supply system according to any one of claims 1 to 4, further comprising:
a wired connector that receives a power supply from a wired power supply plug;
a first switch that switches between outputting an input to the wired connector to the connector and connecting an output of the power conversion unit to an output of the connector; and
a switching control unit that controls the first switch such that the input to the wired connector is output to the connector, when the wired power supply plug is connected to the wired connector.

8. The wireless power supply system according to any one of claims 1 to 4, further comprising:
a charging control unit communicating with an on-board charging control device in the electric mobility through a signal line included in the charging port for wired power supply of the electric mobility, and including a wireless communication unit that wirelessly communicates with a power transmission device that transmits power to the power receiving coil,
wherein the charging control unit determines whether power reception by the power receiving coil can be started, notifies the power transmission device of a power transmission start permission when it is determined that the power reception can be started, and executes a predetermined charging start process in accordance with a predetermined protocol for wired power supply with the on-board charging control device.

9. The wireless power supply system according to claim 8,
wherein the charging control unit determines that the power reception can be started, when an OFF state of a startup switch of the electric mobility in a state in which the connector is connected to the charging port and it is detected that the electric mobility is stopped at a position where power supply can be performed.

10. The wireless power supply system according to any one of claims 1 to 4,
wherein a second switch that switches between conduction and non-conduction between a connection confirmation terminal and a reference potential inside the connector is provided inside the connector,
the second switch is switched to conduction when an OFF state of a startup switch of the electric mobility is detected, and
the second switch is switched to non-conduction when charging ends.
